# EUROPÄISCHE PATENTSCHRIFT

(11) **EP 0 395 782 B1**
(45) Veröffentlichungstag und Bekanntmachung des Hinweises auf die Patenterteilung: **12.01.1994**
(21) Anmeldenummer: 89108061.6
(22) Anmeldetag: 03.05.1989
(51) Int. Cl.: H03L 3/00, H02M 3/338

(54) **Oszillator**
Oscillator
Oscillateur

(43) Veröffentlichungstag der Anmeldung: 07.11.1990
(73) Patentinhaber: SIEMENS AKTIENGESELLSCHAFT, 80333 München (DE)
(72) Erfinder: Rottner, Kurt, D-8520 Erlangen (DE); Jann, Wolfango, Dipl.-Ing., D-8520 Buckenhof (DE)

(56) Entgegenhaltungen:
- DE-A- 3 420 033
- FR-A- 2 033 004
- US-A- 2 842 669
- US-A- 2 896 146

## Beschreibung

Die Erfindung betrifft einen Oszillator mit einer angekoppelten Last. Derartige Oszillatoren sind beispielsweise in dem Buch "Elektronik ohne Ballast" von Otto Limann, erschienen im Franzis-Verlag GmbH, 1978, auf den Seiten 147 bis 151 beschrieben. Als Last kann beispielsweise eine im oben genannten Buch auf den Seiten 162, 163 und 175 beschriebene Spannungsvervielfacherschaltung in einer Hochspannungsversorgung für einen Röntgenbildverstärker Verwendung finden.

Die Startphase ist bei Oszillatoren oder Schwingkreisen oft kritischer als die Aufrechterhaltung der Schwingung, wenn der Oszillator einmal angestoßen ist. Das ist ganz besonders dann der Fall, wenn die Last während des Anschwingvorganges viel größer ist als im eingeschwungenen Zustand. Der Oszillator schwingt dann schlecht oder nicht an. Das Problem ist aus US-A-2 896 146 bekannt.

Bei einer Spannungsvervielfacher-Schaltung als Last an einem Oszillator ist dies der Fall. Der zum Aufladen der Kondensatoren der Hochspannungskaskaden benötigte Strom wird dem Oszillator während der An- und Hochschwingphase entzogen, so daß ein sicheres und schnelles Anschwingen nicht immer gewährleistet ist.

Die Erfindung geht von der Aufgabe aus, einen Oszillator der eingangs genannten Art zu schaffen, der auch bei angekoppelter Last leicht an- und hochschwingen kann.

Die Aufgabe wird dadurch gelöst, daß die Last über wenigstens einen spannungsabhängigen Widerstand mit dem Oszillator verbunden ist, der im Bereich niedriger Spannung hochohmig und im Bereich höherer Spannungen niederohmig ist. Dadurch wird erreicht, daß der Laststrom erst fließen kann, wenn der Oszillator angeschwungen ist.

Als Koppelglieder lassen sich zwischen Schwingkreis und Last in vorteilhafter Weise zwei in Serie geschaltete Zener-Dioden (Z-Dioden) mit zueinander entgegengesetzten Sperrpolungen verwenden. Durch die schwingpegelabhängige Lastankopplung mittels der zwei zueinander gegenpolig geschalteten Z-Dioden, z.B. bei Oszillatoren mit Hochspannungskaskade in Röntgenbildverstärker-Spanungsversorgungen, lassen sich die Anschwingvoraussetzungen für belastete Oszillatoren verbessern. Die zwei Z-Dioden werden erst dann leitend, wenn der Oszillator an- und soweit hochgeschwungen ist, daß die Spitzenspannung an dem Schwingkreis mindestens gleich groß ist wie die "Öffnungsspannung".

Bei beispielsweise der Verwendung einer Hochspannungskaskade als Last kann dem Schwingkreis dabei nur soviel Energie für die Aufladung der Kaskade entzogen werden, wie unter gleichzeitiger Aufrechterhaltung der Schwingspitzenspannung, die gleich der Öffnungsspannungen der beiden Z-Dioden ist, nachgeliefert werden kann. Die Schwingung reißt also nicht mehr durch Lastzuschaltung ab. Dabei wird die Kaskade aufgeladen. Die Zener-Dioden öffnen nach jeder Erhöhung der Kaskadenladung bis zur vollen Ladung der Kaskade und immer erst dann, wenn die Schwingspitzenspannung größer als die Öffnungsspannung und Kaskaden-Ladespannung am Kaskadeneingang ist, bis die Ausgangsspannung der Kaskade ihren Endwert erreicht hat.

Diese Anordnung ist viel vorteilhafter als eine Entkopplung in Art einer Strombegrenzung durch einen, in oben genanntem Buch auf Seite 175 beschriebenen, normalen, spannungsunabhängigen Widerstand, weil durch einen Widerstand als Entkopplungsglied der Innenwiderstand der ganzen Schaltung zum Ausgang hin erhöht wird. Mit zwei Zener-Dioden wird der Innenwiderstand fast nicht erhöht. In der Anschwingphase jedoch wird eine hochohmige Entkopplung durch die noch sperrenden Zener-Dioden erreicht.

Anstelle der beiden Zener-Dioden läßt sich auch erfindungsgemäß als spannungsabhängiger Widerstand ein Varistor verwenden, der zwischen Oszillator und Last geschaltet ist.

Die Erfindung wird nachfolgend anhand eines Ausführungsbeispieles näher erläutert.

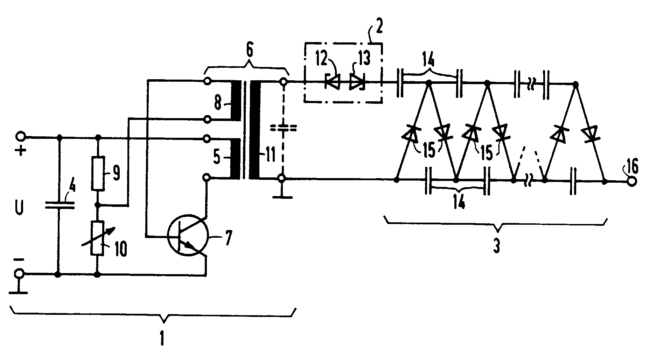

In der Figur ist der Oszillator 1 dargestellt, der über einen spannungsabhängigen Widerstand 2 mit der Last, eine Hochspannungs-Kaskade 3 für die Hochspannungsversorgung eines Röntgenbildverstärkers, verbunden ist. Dem Oszillator 1 wird an seinem Eingang eine Betriebsspannung U zugeführt, an der zur Glättung ein Kondensator 4 liegt. Die positive Spannung wird an eine erste Primärwicklung 5 eines Schwingtrafos 6 als Schwingkreis zugeführt. Der zweite Anschluß der ersten Primärwicklung 5 ist über einen Transistor 7 mit Masse verbunden. Die für den Oszillator 1 erforderliche negative Rückkopplung des Schwingkreises erfolgt dabei über eine zweite Primärwicklung 8, deren einer Anschluß mit der Basis des Transistors 7 verbunden ist. Der zweite Anschluß der zweiten Primärwicklung 8 ist an einem aus einem Widerstand 9 und einem veränderlichen Widerstand 10 bestehenden Spannungsteiler angeschlossen.

Den Ausgang des Oszillators 1 bildet die Sekundärwicklung 11 des Schwingtrafos 6. An ihm ist über den spannungsabhängigen Widerstand 2 die Last angeschlossen, die aus der Hochspannungs-Kaskade 3 besteht. Als spannungsabhängiger Widerstand 2 sind zwei Zener-Dioden 12 und 13 derart in Reihe geschaltet, daß die Sperrpolung beider Zener-Dioden entgegengesetzt gerichtet sind. Durch diese gegeneinander geschalteten Zener-Dioden kann erst ein Strom fließen, wenn die Ausgangsspannung des Schwingkreises größer als die Öffnungsspannungen beider Zener-Dioden 12 und 13, d.h. die Sperrspannung beispielsweise der ersten Zener-Diode 12 und die Öffnungsspannung der zweiten Zener-Diode 13, überschritten ist. Erst dann kann ein Strom fließen, der eine Aufladung der Hochspannungs-Kaskade 3 bewirkt, die in bekannter Weise aus Kondensatoren 14 und Dioden 15 besteht. An dem Ausgang 16 der Hochspannungs-Kaskade 3 liegt dann eine hohe Gleichspannung an, die beispielsweise als Betriebsspannung für einen Bildverstärker und dessen Elektroden verwendet werden kann.

Als spannungsabhängigen Widerstand 2 lassen sich alle Bauelemente verwenden, die bei geringen Spannungen einen hochohmigen Widerstand aufweisen und bei hohen Spannungen niederohmig sind. Hierzu kann auch ein VDR-Widerstand (Voltage Dependent Resistor), ein sogenannter Varistor, Verwendung finden. Auch wären Schaltmittel denkbar, die beispielsweise durch einen Schwellwertschalter gesteuert werden, der bei Überschreitung einer eingebbaren Schwelle die Last zuschaltet.

Durch diese Schaltungsanordnung erhält man einen Oszillator, der leicht an- und hochschwingen kann, da die Last erst im eingeschwungenen Zustand zugeschaltet wird.

## Patentansprüche

1. Oszillator (1) mit einer angekoppelten Last (3), **dadurch gekennzeichnet,** daß die Last (3) über wenigstens einen spannungsabhängigen Widerstand (2) mit dem Oszillator (1) verbunden ist, der im Bereich niedriger Spannungen hochohmig und im Bereich höherer Spannungen niederohmig ist.

2. Oszillator (1) nach Anspruch 1, **dadurch gekennzeichnet,** daß der spannungsabhängige Widerstand (2) zwei in Serie geschaltete Zener-Dioden (12, 13) aufweist, die derart gegeneinander geschaltet sind, daß die Sperrpolungen der Zener-Dioden (12, 13) entgegengesetzt gerichtet sind.

3. Oszillator (1) nach Anspruch 1, **dadurch gekennzeichnet,** daß der spannungsabhängige Widerstand (2) einen Varistor aufweist.

## Claims

1. Oscillator (1) having a load (3) coupled thereto, characterized in that the load (3) is connected with the oscillator (1) by way of at least one voltage-dependent resistor (2), which oscillator is of high-resistance in the range of low voltages and is of low-resistance in the range of higher voltages.

2. Oscillator (1) according to claim 1, characterized in that the voltage-dependent resistor (2) has two Zener diodes (12, 13) which are connected in series and which are connected back to back in such a way that the blocking polarities of the Zener diodes (12, 13) are oppositely directed.

3. Oscillator (1) according to claim 1, characterized in that the voltage-dependent resistor (2) comprises a varistor.

## Revendications

1. Oscillateur (1) comportant une charge couplée (3), caractérisé en ce que la charge (3) est reliée, par l'intermédiaire d'au moins une résistance (2) dépendante de la tension, à l'oscillateur (1), résistance qui est à forte valeur ohmique dans la zone des faibles tensions, et qui est à faible valeur ohmique dans la zone des fortes tensions.

2. Oscillateur (1) suivant la revendication 1, caractérisé en ce que la résistance dépendante de la tension (2) comporte deux diodes Zener (12, 13) montées en série, qui sont montées opposées l'une par rapport à l'autre de telle sorte que les pôles de blocage des diodes Zener (12, 13) soient dirigés dans des sens opposés.

3. Oscillateur (1) suivant la revendication 1, caractérisé en ce que la résistance (2) dépendante de la tension comporte un varistor.
